(19) Europäisches Patentamt
European Patent Office
Office européen des brevets

(11) **EP 3 282 274 A1**

(12) **EUROPEAN PATENT APPLICATION**

(43) Date of publication:
**14.02.2018 Bulletin 2018/07**

(51) Int Cl.:
***G01S 5/02*** (2010.01)          ***G01S 11/06*** (2006.01)
***H04W 64/00*** (2009.01)

(21) Application number: **16183888.3**

(22) Date of filing: **11.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Sensewhere Limited**
**Edinburgh, Lothian EH2 3AA (GB)**

(72) Inventors:
• **ARSLAN, Tughrul Sati**
  **Edinburgh EH9 2PY (GB)**
• **SEVAK, Zankar Upendrakumar**
  **Edinburgh EH12 8WS (GB)**
• **ALSEHLY, Firas**
  **Edinburgh EH14 3JB (GB)**

(74) Representative: **Hindles Limited**
**Clarence House**
**131-135 George Street**
**Edinburgh, EH2 4JS (GB)**

(54) **APPARATUS AND METHODS FOR ESTIMATING LOCATION-RELATED PROPERTIES OF MOBILE DEVICES**

(57) Electromagnetic signal sources (2), such as WiFi access points and BLE beacons, which are sufficiently close to each other that a mobile device (4) with a an electromagnetic signal receiver can detect signals from them both at the same time are paired. Measurements of signals from the electromagnetic signal sources are made by mobile devices and analysed. Properties of the transmission of signals from one of the signal sources in the pair to the location of the other signal source in the pair, and vice versa, are thereby calculated to thereby estimate the distance between the pair of signal sources. The pair of signal sources are considered to be linked and a database is built up including data which, for each instance of a pair of signal sources which are treated as linked, identifies the two signal sources which make up the pair and data which can be related to the estimated distance between each pair of linked signal sources.

Fig. 1

EP 3 282 274 A1

**Description**

Background to the invention

The invention relates to the field of estimating location-related properties of devices using measurements of signals from electromagnetic signal sources, such as WiFi access points, beacons etc. The location-related properties may for example be the position of the device, the distance of the device from a location, or whether the position of the device meets one or more location criteria.

The devices may be mobile devices, which typically comprise radio transceivers and one or more processors, suitable mobile devices include mobile phones, personal digital assistants, laptop computers, tablet computers, wearable devices (e.g. glasses, shoes, watches), vehicles, drones and so forth.

According to the invention, data collecting mobile devices make measurements of signals from signal sources which are used to subsequently estimate the location-related properties of subject devices, which comprise electromagnetic signal receivers and which may be the same or different devices to the data collecting mobile devices.

Introduction to the invention

It is known to estimate the position of a mobile device which comprises an electromagnetic signal (e.g. radio or optical) receiver by analysing signals received, by the electromagnetic signal receiver, from electromagnetic signal sources which are within detection range of the receiver. An example system is disclosed in EP 2517041 (Sensewhere Limited). These systems calculate an estimate of the distance of the electromagnetic signal receiver from the electromagnetic signal sources which can be detected by the receiver, and also use data concerning the absolute position of those electromagnetic signal sources to estimate the absolute position of the electromagnetic signal receiver and thereby the subject mobile device. Measurements from radio receivers of mobile devices are used to find and correct errors in the estimated position of the electromagnetic signal sources to build and improve a database of absolute position of signal sources.

Distance estimates can be made e.g. by analysing the strength of signals from electromagnetic signal sources (in which case data concerning the strength of the signals which are emitted by the electromagnetic signal sources may also be processed) or by analysing the timing of signals from electromagnetic signals sources (often relative to the timing of signals transmitted to the electromagnetic signal sources), for example making round trip time measurements.

These known systems estimate absolute positions of the radio receiver, and thereby the subject mobile device, in some appropriate reference frame, for example one which uses Cartesian or polar coordinates (e.g. latitude, longitude and optionally altitude) relating to a part of the earth.

However, it can be difficult to make good estimates of absolute position in certain circumstances, for example in indoor environments where it is hard to use a global positioning system to calibrate estimates of the absolute position of signal sources, or where there is relatively little data available about the signal sources which are present.

Some aspects of the invention aim to provide an alternative way of estimating distances using measurements of signals from electromagnetic signal sources, which do not require estimates of absolute position to be made. Some aspects of the invention aim to facilitate position dependent technologies, such as geofencing, again without it being essential that absolute position is identified.

Nevertheless some aspects of the invention relate to the problem of estimating the absolute position of signal sources, and some embodiments of the invention provide assistance to absolute positioning systems.

It is also advantageous to provide alternatives to positioning systems which rely on continuous access to global navigation satellite systems by subject mobile devices. Global navigation satellite signal receivers consume significant amounts of power and some embodiments of the invention address the problem of reducing the amount of, or in some embodiments avoiding, usage of global navigation satellite receivers.

Summary of the invention

According to a first aspect of the invention there is provided a method of estimating a location-related property of a subject device comprising an electromagnetic signal receiver, the method comprising the steps of:

at a plurality of data collecting mobile devices comprising electromagnetic signal receivers, measuring electromagnetic signals received from a plurality of electromagnetic signal sources,

for each of a plurality of pairs of the electromagnetic signals sources, and for each of a plurality of mobile electromagnetic signal receivers, measuring at a plurality of locations of the electromagnetic signal receiver of the respective mobile device, the signals received from both of the electromagnetic signal sources in the pair, and processing the received signals to determine at least one signal transmission parameter related to the transmission of signals from each one of the pair of electromagnetic signal sources to the location of the other of the pair of electromagnetic signal sources,

storing said at least one signal transmission parameter, or a parameter derived therefrom, with reference to the pair of electromagnetic signal sources, and

subsequently processing the stored signal transmission parameters, or parameters derived therefrom, to estimate the location-related property of the subject device.

The signal transmission parameters can be used to estimate the distance between each pair of electromagnetic signal sources and the resulting data can be used to estimate distances between electromagnetic signal sources which are connected by paths formed through the pairs of electromagnetic signal sources. The data which is stored typically comprises said at least one signal transmission parameter but it may comprise at least one parameter derived therefrom, for example an estimate of the distance between the pair of electromagnetic signal sources which has been derived from the said one or more measured signal transmission parameters. Typically, the processed signal transmission parameters, or parameters derived therefrom are stored in a database (e.g. a database specifying estimates of the distance between the signal sources which make up pairs of signal sources) and that database is subsequently queried to estimate the location-related property of a subject device (which typically detects on or more said signal sources).

The subject device, in connection with which the location-related property is estimated, is typically a mobile device however it may be a said electromagnetic signal source, for example.

The subject device may be one of the data collecting mobile devices. Indeed, in some embodiments, mobile devices, such as mobile telephones, function as both data collecting mobile devices and subject devices in respect of which location-related properties are estimated. Nevertheless, this is not essential and the subject device need not be a data collecting mobile device.

Thus, the signal transmission parameters relate to pairs of electromagnetic signal sources (each pair of signals sources being an instance of a pair of signal sources). A data structure may store data in respect of each of a plurality of said pairs (each instance). Typically, the majority of electromagnetic signal sources are in a plurality of said pairs (instances). Typically, the pairs of electromagnetic signal sources form a network.

The electromagnetic signal sources, and the electromagnetic signal receivers, are typically electromagnetic signal transceivers. Typically, the electromagnetic signal receiver is a mobile radio receiver, for example a mobile telephone. Nevertheless, some applications of the invention relate to estimating the location, or distance from a location, of electromagnetic signal sources and so the subject device may be an electromagnetic signal source, for example it may be an electromagnetic signal transceiver which is also a said electromagnetic signal source. In this case, the subject devices are typically stationary electromagnetic signal sources, such as wireless network access points, beacons (e.g. beacons according to the Bluetooth Low Energy (BLE) specification). etc. However, typically, the mobile device (and their electromagnetic signal receivers) are not the electromagnetic signal sources themselves. Thus, the signal transmission parameters can be estimated with data received by the electromagnetic signal receivers of the data collecting mobile devices, without a requirement to be able to control or receive measurement data from the electromagnetic signal sources.

The stored signal transmission parameters are typically processed, for example to determine estimates of the distance between signal sources. Thus the processing of the stored signal transmission parameters may comprise deriving parameters from the stored signal transmission parameters and subsequently processing the parameters thereby derived.

The said signal transmission parameters and/or parameters derived therefrom, are typically stored in a database of positioning data, for later use in estimating the location-related property of subject devices.

The invention also extends in a second aspect to a method of generating such a database of positioning data. According to the second aspect of the invention there is provided a method of generating a database of positioning data, the method comprising the steps of:

at a plurality of data collecting mobile devices comprising electromagnetic signal receivers, measuring electromagnetic signals received from a plurality of electromagnetic signal sources,

for each of a plurality of pairs of the electromagnetic signals sources, and for each of a plurality of mobile electromagnetic signal receivers, measuring at a plurality of locations of the electromagnetic signal receiver of the respective mobile device, the signals received from both of the electromagnetic signal sources in the pair, and processing the received signals to determine at least one signal transmission parameter related to the transmission of signals from each one of the pair of electromagnetic signal sources to the location of the other of the pair of electromagnetic signal sources, and

storing said at least one signal transmission parameter, or a parameter derived therefrom, with reference to the pair of electromagnetic signal sources.

In a third aspect there is provided a tangible data storage medium (for example, solid state memory and/or at least one magnetic disc and/or at least one optical disc) storing a database, the database comprising data specifying a plurality of pairs of electromagnetic signal sources, and, for each of the plurality of pairs, signal transmission parameters related to the transmission of signals from each one of each of the pair or electromagnetic signal sources to the location of the other of the pair of electromagnetic signal sources, or parameters derived therefrom (for example estimates of the distance between the signal sources in each pair). Typically, the signal transmission parameters are obtained by the method of the first aspect of the invention.

Thus the invention extends in a fourth aspect to methods of estimating a location-related property of a subject device comprising an electromagnetic signal receiver, the methods comprising providing a tangible data storage medium storing a database, the database comprising data specifying a plurality of pairs of electromagnetic signal sources, at least one signal transmission parameter indicative of the transmission of signals from each one of the pair of electromagnetic signal sources to the location of the other of the pair of electromagnetic signal sources, or a parameter derived therefrom, the methods further comprising querying the database.

For each pair at least one signal transmission parameter is related to the distance between the pair of electromagnetic signal sources. Typically, for each pair, the at least one signal transmission parameter is processed to estimate the distance between the pair of electromagnetic signal sources.

The at least one signal transmission parameter may be derived from a measurement of the time required for a signal to be transmitted from the data collecting mobile device to the signal source and/or from the signal source to the data collecting mobile device. For example, the measurement may be a time of flight measurement, round trip time delay measurement etc.

The at least one signal transmission parameter may be derived from measurements of the strength of signals from electromagnetic signal sources by the data collecting mobile devices. Signal transmission parameters related to the transmission of signals from each one of the pair of electromagnetic signal sources to the location of the other of the pair of electromagnetic signal sources can be calculated from measurements of signals (typically made at the same place) from each of the pair of electromagnetic signal sources. Signal transmission parameters related to the transmission of signals from each one of the pair of electromagnetic signal sources to the location of the other of the pair of electromagnetic signal sources can be calculated from variations in (e.g. the distribution of, or values of) the measurements of signals (typically made at the same place) from each of the pair of electromagnetic signal sources by data collecting mobile devices at a plurality of different locations where the data collecting mobile devices can detect both of the pair of electromagnetic signal sources.

It may be that the at least one signal transmission parameter is calculated from a plurality of measurements, at different locations, by a plurality of data collecting mobile devices, of electromagnetic signals from both of the electromagnetic signal sources in the pair, and processed to determine an estimate of the distance between the electromagnetic signal sources in the respective pair.

It may be that the at least one signal transmission parameter comprises an estimate of the attenuation of an electromagnetic signal between one of the pair of electromagnetic signal sources and the location of the other of the pair of electromagnetic signal sources, or a parameter derived therefrom, or the strength of an electromagnetic signal from one of the pair of electromagnetic signal sources at the location of the other of the pair of electromagnetic signal sources, or a parameter derived therefrom.

It may be that the at least one signal transmission parameter comprises one or more of (1) the maximum difference between the strength of signals detected by the plurality of electromagnetic signal receivers from the electromagnetic signal sources in each pair, optionally adjusted for the transmission strengths of either or both of the electromagnetic signal sources (2) the maximum sum of the strength of signals detected by the plurality of mobile electromagnetic signal receivers from the electromagnetic signal sources in each pair, optionally adjusted for the transmit signal strengths of either or both of the electromagnetic signal sources in each pair or (3) a value derived from (1) and (2).

The value derived from (1) and (2) may be a mean (e.g. arithmetic mean, geometric mean, logarithmic mean etc.) of (1) and (2). The strength of signals may be expressed in a linear scale, logarithmic scale, dBm etc. The maximum sum of the strength of the signals may be determined by calculating the minimum of the absolute value of the sum of the signal strengths expressed in logarithmic terms (e.g. as dBm) as, in this case, the signal strengths will typically have negative values and so the maximum sum of the strength of the signals is represented by the minimum of the absolute value of the sum of the signal strengths. Values (1) and/or (2) may or may not be calculated adjusting for the strength of the electromagnetic signal sources in the pair.

Methods which consider the difference between the strength of signals have the advantage of cancelling out some kinds of systematic errors or variations between data collecting devices.

The method may comprise processing the stored signal transmission parameters between a plurality of pairs of signal sources, or parameters derived therefrom (such as estimates of the distance between the pairs of electromagnetic signal sources), to estimate a consistency parameter relating to the consistency of the estimated distance between the pairs of electromagnetic signal sources derived from the stored signal transmission parameters.

The method may comprise processing the stored signal transmission parameters or parameters derived therefrom (such as estimates of the distance between the pairs of electromagnetic signal sources) to improve the consistency of the estimated distance between the pairs of electromagnetic signal sources indicated by the stored signal transmission parameters or data derived therefrom.

In practice, due to estimation error, the estimated distances between the pairs of electromagnetic signal sources will not be entirely consistent. The consistency parameter may be calculated taking into account the consistency of the relative position of the electromagnetic signal sources indicated by the estimates of distance between the pairs of electromagnetic signal sources. The consistency parameter may be obtained by treating the electromagnetic signal sources as nodes of a graph, with each said pair of electromagnetic signal sources being represented by an edge, between the respective nodes, with a weighting of the distance between the electromagnetic signal sources determined from the stored signal transmission parameters. The consistency parameter may be estimated by processing the graph, for example, to determine the stress in the links between nodes (representing pairs of electromagnetic signal sources).

Processing the graph may comprise calculating a stress parameter concerning one or more links between nodes and/or one or more uncertainty parameters concerning calculated uncertainty in the relative position of an electromagnetic signal source, or distance between a pair of electromagnetic signal sources. Processing the stored signal transmission parameters or data derived therefrom to improve the consistency of the estimated distance between the pairs of electromagnetic signal sources typically outputs revised distance estimate data comprising estimates of the distance between the pairs of electromagnetic signal sources. Typically, this processing comprises modifying estimates of the distance between pairs of electromagnetic signal sources obtained from the stored signal transmission parameters or data derived therefrom, to improve consistency of the distance measurements.

The consistency parameter may relate to a pair of electromagnetic signal sources or an individual electromagnetic signal source. For example, the consistency parameter may relate to the consistency of the data concerning each pair of electromagnetic signal sources comprising the respective electromagnetic signal source.

The method may further comprise associating a label with a said pair of electromagnetic signal sources, the label being indicative of a place.

This labelling is also applicable to databases of pairs of electromagnetic signal sources independently of how the database was built up and so the invention also extends to a method of estimating a location-related property of a subject device comprising an electromagnetic signal receiver, the method comprising the steps of: processing a database of pairs of electromagnetic signal sources by associating a label with a said pair of electromagnetic signal sources, the label being indicative of a place. The said database may further comprise data indicative of the distance between the electromagnetic signal sources in each pair, for example stored signal transmission parameters related to the transmission of signals from each one of the pair of electromagnetic signal sources to the location of the other of the pair of electromagnetic signal sources.

The label may be indicative of a venue (such as a name or other label associated with a food or retail outlet, or entertainment, accommodation or educational venue) which contains, overlaps or is adjacent to either or both of the pair of electromagnetic signal sources.

The method may further comprise analysing the said pair of electromagnetic signal sources and labels to thereby amend the labelling of pairs of electromagnetic signal sources.

The amendments may for example comprise: adding new labels, copying labels from one pair of electromagnetic signal sources to another, merging labels etc.

The method may comprise associating a label with one or more individual signal sources.

The method may comprise analysing the stored signal transmission parameters, or data derived therefrom and copying a label from a first pair of electromagnetic signal sources to a second pair of electromagnetic signal sources, the first and second pairs having one signal source in common, if at least one criteria is met, the at least one criteria comprising that the stored signal transmission parameter, or data derived therefrom, is indicative that the distance between the signal sources in the second pair is below a threshold.

The method may comprise determining that an electromagnetic signal receiver (e.g. a subject mobile device having an electromagnetic signal receiver) is within a location responsive to detection by that electromagnetic signal receiver of signals from both of the electromagnetic signal sources which form a pair, the pair being associated with a label representative of the location, optionally wherein the signals further meet one or more quality criteria (e.g signal strength criteria).

The invention extends in a fifth aspect to a method of estimating a location-related property of a subject device comprising an electromagnetic signal receiver, the method comprising providing a tangible data storage medium storing a database, the database comprising data specifying a plurality of pairs of electromagnetic signal sources and data related to the distance between the electromagnetic signal sources in each pair (typically at least one signal transmission parameter indicative of the transmission of signals from each one of the pair of electromagnetic signal sources to the location of the other of the pair of electromagnetic signal sources, or a parameter derived therefrom), the method further comprising querying the database to estimate the location-related property of a subject device.

In a sixth aspect the invention extends to a method according to the first, second, fourth or fifth aspect, wherein estimating the location-related property of a subject device is estimating the distance between a (typically mobile) subject device comprising an electromagnetic signal receiver and a location and the method comprises (subsequently, e.g. during an operation phase):

at the electromagnetic signal receiver of the subject mobile device, measuring signals from electromagnetic signal sources,

thereby identifying at least one said electromagnetic signal source, or pair of electromagnetic signal sources detected by the electromagnetic signal receiver,

determining a path between the subject device and the location, the path comprising a plurality of links between said pairs of electromagnetic signal sources,

estimating the distance between subject device and the location by processing the stored signal transmission parameters relating to the pairs of electromagnetic signal sources which make up the path, or parameters derived therefrom.

The location may be a position (e.g. a 2D or 3D position). The location may be a locus, for example an area or volume. The location may be determined with reference to a group of links and/or signals. For example, estimating the distance between a subject device and a location may comprise estimating the distance to an electromagnetic source, or pair of electromagnetic sources, identified as being associated with the location.

The determined path comprises one or more of the electromagnetic signal sources which are detected by the electromagnetic signal receiver of the subject device. The determined path between the subject device and the location is typically determined by determining a path between at least one side electromagnetic signal source, or pair of electromagnetic signal sources detected by the electromagnetic signal receiver and the location, typically taking into account the estimated distances between pairs of electromagnetic signal sources derived from the stored signal transmission parameters, or parameters derived therefrom.

The estimated distance may be obtained by summing the estimated distances between pairs of electromagnetic signals which are part of the path. The estimated distance may be obtained by processing the estimated distances between pairs of electromagnetic signal sources, typically including at least the electromagnetic signals which make up the path, to estimate a Euclidean distance from the subject device, or an electromagnetic signal source or pair of electromagnetic signal sources detected by the subject device, to the location.

The estimated distance between the subject device and the location may include the distance between the subject device and at least one electromagnetic source detected by the electromagnetic signal receiver which is part of the path.

However, the estimated distance may be calculated as the estimated distance between one of (or pair of) signal sources and the location, or a signal source (or pair of) signal sources adjacent to or forming part of the location.

Similarly, the estimate distance between the subject device and the location may be calculated to the location of an electromagnetic signal source, or pair of electromagnetic signal sources, or may further comprise an estimate of the distance from an electromagnetic signal source, or pair of electromagnetic signal sources, to a point in space or a further mobile device, which is not coincident with an electromagnetic signal source, or pair of electromagnetic signal sources.

The location may be the location of a further mobile device comprising an electromagnetic signal receiver and the method may comprise at the electromagnetic signal receiver of the further mobile device detecting at least one electromagnetic signal source, or pair of electromagnetic signal sources. The path which is determined may comprise a path between one of (or a pair of) the signal sources which is detected by the subject mobile device and one of (or a pair of) the signal sources which are detected by the further mobile device.

Estimating the distance between a subject mobile device comprising an electromagnetic signal receiver and a location may be carried out without estimating the absolute position of the subject mobile device.

The location-related property may be whether the distance between a subject device and a location fulfils one or more criteria (e.g. is in a specific range).

The method may comprise determining whether the said distance from a location fulfils one or more proximity criteria.

The location may be defined by at least one label associated with at least one signal source, or pair of signal sources.

The method may comprise triggering an action responsive to the location-related property meeting one or more criteria. For example, in response to determining that the subject mobile device is within a certain distance of a location. This can be used for example to trigger other software applications, notify a user, send a message, switch on a global navigation satellite service module etc.

The method may further comprise receiving absolute position data concerning the absolute position of some of the electromagnetic signal sources and processing the stored signal transmission parameters between said pairs of electromagnetic signal sources to estimate the absolute position of at least some of the other electromagnetic signal sources.

By an absolute position were refer to absolute position in a terrestrial position coordinate scheme, such as latitude, longitude (and optionally altitude) or x, y (and optionally z coordinate) of a grid reference system, such as a national grid reference system (e.g. United States National Grid reference, British National Grid reference), the military grid reference system, Universal Transverse Mercator grid system, universal polar stereographic system etc.

The method may further comprise estimating the position of a subject mobile device comprising an electromagnetic signal receiver, wherein the electromagnetic signal receiver detects signals from one or more said electromagnetic signal sources, further comprising processing signals received by the electromagnetic signal receiver from one or more said electromagnetic signal sources and a database of positioning information comprising data about the position of a plurality of electromagnetic signal sources or signals therefrom, to thereby estimate the position of the subject mobile device, wherein the said processing takes into account the said consistency of the estimated distance between pairs of electromagnetic signal sources derived from the stored signal transmission parameters, for at least one pair of electromagnetic signal sources comprising an electromagnetic signal source detected by the electromagnetic signal receiver.

Taking into account the consistency of the estimated distance between pairs of electromagnetic signal sources may comprise processing the said parameter indicative of an estimated distance between the pairs of electromagnetic signal sources.

Estimating the location-related property may comprise determining whether the location of a subject mobile device fulfils one or more location criteria, the subject mobile device having an electromagnetic signal receiver, the method comprising:

at the electromagnetic signal receiver, measuring signals from electromagnetic signal sources,

thereby detecting at least one electromagnetic signal source which is part of at least one of the said pairs of electromagnetic signal sources,

determining from which at least one electromagnetic signal source is detected whether the one or more location criteria are fulfilled.

It may be that the at least one electromagnetic signal source which is detected comprises one or more said pairs of electromagnetic signal sources (i.e. it is determined that both of electromagnetic signal sources which make up one or more of the said pairs of electromagnetic signal sources have been detected by the electromagnetic signal receiver of the subject mobile device).

The step of determining whether the one or more location criteria are fulfilled may comprise estimating the distance between the subject mobile device or one or more of the detected electromagnetic signal sources and a location. The step of determining whether the one or more location criteria are fulfilled may comprise determining whether one or more electromagnetic signal source, or the signal sources which make up one more pairs of electromagnetic signal sources, are detected.

Accordingly, the invention extends in a seventh aspect to a method of determining whether the location of a subject mobile device fulfils one or more location criteria, the subject mobile device having an electromagnetic signal receiver, the method comprising:

providing a tangible data storage medium storing a database, the database comprising data specifying a plurality of pairs of electromagnetic signal sources, at least one signal transmission parameter indicative of the transmission of signals from each one of the pair of electromagnetic signal sources to the location of the other of the pair of electromagnetic signal sources, or a parameter derived therefrom,

at the electromagnetic signal receiver, measuring signals from electromagnetic signal sources,

thereby detecting at least one electromagnetic signal source which is part of at least one of the said pairs of electromagnetic signal sources,

querying the database and determining from which at least one electromagnetic signal source is detected whether the one or more location criteria are fulfilled.

In an eighth aspect of the invention there is provide a method of determining whether a (first) subject mobile device and a further (second) subject mobile device, each of which comprises an electromagnetic signal receiver, are close to each other (meet one or more proximity criteria) comprising at the electromagnetic signal receivers of both the subject mobile device and the further subject mobile device, detecting signals from electromagnetic signal sources, and querying a database of pairs of electromagnetic signal sources to determine if the subject mobile device detects one of a said pair of electromagnetic signal sources and the further subject mobile device detects the other of a said pair of electromagnetic signal sources and, if so, determining that the subject mobile device and further subject mobile device are close to each other.

The database may be a database which specifies the plurality of pairs of electromagnetic signal sources and parameters indicative of the transmission of electromagnetic signals from one of the pair of electromagnetic signal sources to the location of the other of the pair of electromagnetic signal sources, or a parameter derived therefrom (for example an estimate of the distance between the pair of electromagnetic signal sources derived therefrom).

The pairs may be pairs of electromagnetic signal sources which had been detected concurrently by mobile devices comprising electromagnetic signal receivers. The method may comprise the step of generating the database of pairs of electromagnetic signals sources by receiving electromagnetic signals at a plurality of mobile devices comprising electromagnetic signal receivers and if a mobile device detects both electromagnetic signal sources concurrently, optionally with a signal strength exceeding a threshold, creating an instance of a said pair of electromagnetic signal sources in the database. The database may be a database according to the fourth aspect above.

According to a ninth aspect there is provided a method of estimating a location-related property of a subject mobile device, the method comprising the steps of, at a plurality of data collecting mobile devices comprising electromagnetic signal receivers, measuring electromagnetic signals received from a plurality of electromagnetic signal sources,

for each of a plurality of pairs of the electromagnetic signals sources which have been detected concurrently by one of the electromagnetic signal receivers, creating an instance of a link between the pair of electromagnetic signal sources and storing data concerning that link in a database,

for each instance of a link, processing measurements of signals received from both of the pair of electromagnetic signal sources concurrently to determine a distance parameter indicative of an estimated distance between the pair of electromagnetic signal sources and storing said distance parameter in the database,

processing the database and calculating at least one adjusted distance parameter to increase the consistency of the estimated distances between the signal sources,

subsequently receiving from a subject mobile device data indicative of signal sources which are detected by the subject mobile device and querying the database to thereby calculate an estimate of the location-related property of the subject mobile device.

The method may comprise the step of estimating how accurately the location-related property has been determined and determining whether, or how frequently, to use a global satellite navigation system receiver of the subject mobile device to estimate the absolute position of the subject mobile device responsive thereto. For example, if the location-related property is estimated as meeting one or more accuracy criteria (indicative of accuracy being above one or more thresholds) the global satellite navigation system receiver of the subject mobile device may be used less frequently to estimate the absolute position of the subject mobile device than would otherwise be the case, or not at all. Thus, the method may allow usage of a global satellite navigation system receiver to be reduced or avoided, thereby reducing power consumption, when the location-related property can be estimated sufficiently well ( meeting one or more accuracy criteria).

It may be that a link between a pair of signal source is created only if the detected signals from the signal sources meet one or more criteria, for example, that they individually or in combination exceed a signal strength threshold.

The measurements may be measurements of the strength of signals received from one or more specific signal sources. The distance of the subject mobile device from the one or more specific signal sources may be estimated from the measured strength of electromagnetic signals received by the subject mobile device from one or more specific signal sources. The measurement may be a measurement of the timing of electromagnetic) signals from and/or to the one or more specific signal sources for example, a measurement of time of flight or round-trip delay. The distance of the subject mobile device from the one or more specific signal sources may be estimated from the time of flight of electromagnetic signals from and/or to the one or more specific signal sources. The distance from the subject mobile device to one or more specific signal sources may be estimated by the one or more processors of the subject mobile device, for example by the execution of the program module or by an operating system (comprising operating system program instructions stored in the memory) executed by the at least one processor, or remotely from the subject mobile device, for example by a positioning system controller (after transmission of the measurements from the subject mobile device to the positioning system controller).

The step of estimating the location-related property of a subject mobile device may be carried out by the subject mobile device, or elsewhere. For example the estimate of position may be carried out by a positioning system controller (comprising one or more servers) or distributed between the positioning system controller and the subject mobile device. Thus, the measurement data or data derived therefrom, may be transmitted from the subject mobile device to a server for processing.

The electromagnetic signals typically encode and thereby transmit digital data (thus enabling the electromagnetic signal receiver to receive transmitted digital data). The electromagnetic signals are typically radio, or in some embodiments visible light signals. The electromagnetic signal receivers may be radio receivers. The electromagnetic signal receivers typically comprise one or more antenna and radio processing circuits configured to receive radio signals and radio signals through the one or more antenna to thereby obtain digital data encoded by the received radio signals. Where the electromagnetic signal receivers comprise visible light signal receivers, they typically comprise photosensors. The signal sources typically generate (and thereby broadcast) electromagnetic waves encoding digital data, typically comprising an identifier of the electromagnetic signal source (e.g. MAC address). Distance estimates may be estimated from the strength of received signals (e.g. the strength of receiver radio or visible light signals). The signal sources may generate signals in response, or only in response, to received signals. For example, they may generate a signal responsive to a received signal to enable time-of-flight bases distance measurement.

The electromagnetic signal sources may comprise Wi-Fi access points (WAPs). The electromagnetic signal sources may comprise Bluetooth low energy (BLE) devices. The electromagnetic signal sources are terrestrial (not orbital satellites).

Typically the electromagnetic signal sources have a transmission power of less than 1W, or less than 300mW. The median distance between the signal sources in the respect pairs of signal sources is typically less than 100m.

Some or all of the mobile devices (subject mobile devices and/or data collecting mobile device) may be cellular telephones. The mobile devices (subject mobile devices and/or data collecting mobile device) may comprise one or more processors which execute the Android operating system (for example Android 6.0.1, or later) (Android is a trade mark of Google, Inc.) or the iOS operating system (for example iOS 9.2 or later) (iOS is a trade mark of Apple, Inc.)

Some or all of the mobile devices (subject mobile devices and/or data collecting mobile device) may comprise satellite positioning system modules, which receive signals from orbital satellites during operation and process these signals to estimate the position of the mobile devices. Some or all of the mobile devices (subject mobile devices and/or data collecting mobile device) may comprise one or more additional sensors, data from which is used to estimate the position of the mobile device(subject mobile devices and/or data collecting mobile device). The additional sensors may be selected from a group consisting of: an accelerometer, a gyroscope, a step counter, a camera. Data from the one or more said sensors may be processed to improve the estimated position of the mobile device (subject mobile devices and/or data collecting mobile device) and/or the estimated distance from the mobile device (subject mobile devices and/or data collecting mobile device) to a signal source and/or the estimated position of a signal source.

One or more of the mobile devices (subject mobile devices and/or data collecting mobile device) may be wearable components, for example watches, glasses, shoes, armbands or contact lenses. The mobile device (subject mobile devices and/or data collecting mobile device) may comprise a plurality of separate or separable components which are in (typically direct) wired or wireless communication with each other (e.g. a mobile telephone, tablet or computer and a separate or separable wearable component). The stored positioning data may be distributed between more than one said component, or replicated in part in more than one said component.

The method may further comprising maintaining at least one database of absolute positioning data, the absolute positioning data concerning identifiers of a plurality of electromagnetic signals sources, signals from the said electromagnetic signal sources, and absolute positions of the said electromagnetic signal sources, or signals from the said electromagnetic signal sources, the method comprising processing the estimated positions of a data collecting mobile device (which may also be a subject mobile device) and the said measurements, or data derived therefrom, to update data concerning the signal source in the at least one database of absolute positioning data.

By maintaining at least one database of absolute positioning data we include adding new data to a database of absolute positioning data, for example data concerning newly detected electromagnetic signals sources or signals therefrom, or additional data concerning electromagnetic signal sources or signals therefrom, and also revising (e.g. updating or editing) data in the at least one database of positioning data.

The absolute positioning data may relate to the (typically estimated) geographical locations (e.g. 2D or 3D coordinates, for example latitude, longitude and optionally altitude) of electromagnetic signal sources (such as BLE beacons or WAPs). A mobile device (subject mobile devices and/or data collecting mobile device) can estimate its position using the position of electromagnetic signals sources and measurements of signals (e.g. measurements of the strength of or timing of electromagnetic signals) from electromagnetic signal sources, or a server may make that calculation for the mobile device.

The absolute positioning data may relate to the (expected) strength of signals from electromagnetic signal sources at a plurality of positions (e.g. 2D or 3D coordinates, for example latitude, longitude and optionally altitude). For example, the positioning data may comprise the (expected) strength of signals from a plurality of electromagnetic signal sources at each of a plurality of (2D or 3D) grid locations. This type of positioning data is typically referred to as fingerprint data and is usable with or instead of data concerning the actual position of signal sources. A mobile device (subject mobile devices and/or data collecting mobile device) can estimate its position from fingerprint data by measuring the signals (typically measurements of the strength of electromagnetic signals) from electromagnetic signal sources, comparing these with the fingerprint data and estimating its positing as the geographical location of the most closely matching fingerprint data, or more typically using interpolation to compute a position intermediate geographical locations in respect of which fingerprint data is stored. The step of comparing measured data with fingerprint data can also be carried out by a server. In a related strategy, the positioning data stores parameters of a function which describes the (expected) spatial variation in the strength of signals from a plurality of electromagnetic signal sources and the mobile device (subject mobile devices and/or data collecting mobile device), or a server, processes this data to determine the location that best fits the measured strength of signals from electromagnetic signal sources. The absolute positioning data may concern both the geographical locations of the said electromagnetic signal sources and the geographical location of signals from the said electromagnetic signal sources.

Positioning data from the at least one database of absolute positioning data may be transmitted to a mobile device (subject mobile devices and/or data collecting mobile device), for use by the mobile device to determine its position. Positioning data would typically be transmitted selectively, and relate to an area that is proximate to the mobile device, or an expected future location of the mobile device. The mobile device may make measurements of signals from electromagnetic signal sources and transmit these to a server.

The positioning system controller may process signals measured by mobile devices (subject mobile devices and/or data collecting mobile device), and it uses these measurements to maintain the at least one database of positioning data. For example, measurements of signals from a plurality of electromagnetic signal sources, received concurrently by a mobile device may be used to improve estimates of the position of electromagnetic signal sources, and thereby used to update the at least one database of positioning data appropriately.

The electromagnetic signal sources may be radio signal sources which broadcast radio signals and the electromagnetic signal receivers may be radio receivers (usually radio transceivers). However, the mobile devices (subject mobile devices and/or data collecting mobile device) may measure and process electromagnetic signals received from other electromagnetic signal sources, for example, they may detect visible light communication signals from optical wireless communication sources, in which case the electromagnetic signal receivers may be optical receivers.

Parameters related to the transmission of signals from each one of the pair of electromagnetic signal sources to the location of the other of the pair of electromagnetic signal sources can typically be determined by considering the transmission of signals from one of the pair of electromagnetic signal sources to the location of the other of the pair of electromagnetic signal sources because the parameters will typically be the same in either direction, e.g. where they relate to the attenuation of signals, signal propagation times etc.

The invention also extends to computing apparatus programmed to execute any of the methods of the invention set out above. The invention extends to computing apparatus comprising one or more processors in electronic communication with a database according to the fourth aspect of the invention and programmed to receive data concerning detected signal sources from a mobile device comprising electromagnetic signal sources and to query the database to estimate a location related property of the mobile device. The data concerning detected signals may comprise identifiers of detected signal sources and may comprise data specifying the strength of signals received from detected signal sources and/or estimates of the distances of the mobile device from the signal sources which it detects.

The optional features described above relate to each aspect of the invention.

<u>Description of the Drawings</u>

An example embodiment of the present invention will now be illustrated with reference to the following Figures in which:

Figure 1 is a diagram of a system for estimating a location-related property of a subject mobile device;

Figure 2 is a schematic diagram of the process by which measurements of the transmission of signals between the location of pairs of signal sources is obtained;

Figure 3 is a flow chart of a procedure for calculating parameters related to signal attenuation;

Figure 4 is a data structure relating to a pair of signal sources;

Figure 5 is a data structure relating to a signal source (which is treated as a node of a graph);

Figure 6 is a data structure of a geotag associated with a link;

Figure 7 is a flow chart of a graph fitting and optimisation procedure; and

Figure 8 is a procedure for estimating the distance between a subject mobile device and a location.

Figure 9 is a diagram of a system for estimating a distance between a subject mobile device and a location which is coincident with a signal source;

Figure 10 is a diagram of a system for estimating a distance between a subject mobile device and a location which is defined by a group of labelled links;

Figure 11 is a diagram showing the procreation of labelled links in a database, according to the invention;

Figure 12 is a further diagram showing the procreation of labelled links in a database, according to the invention;

Figure 13 is a flow chart of a procedure for using the link data from the procedure of Figure 7 in an absolute positioning system.

Detailed Description of an Example Embodiment

The invention considers pairs of electromagnetic signal sources (2), such as WiFi access points and BLE beacons, which are sufficiently close to each other that a mobile device (4) with a radio receiver (8) can detect signals from them both concurrently. Measurements of signals from the electromagnetic signal sources are made by mobile devices and analysed. Properties of the transmission of signals from one of the signal sources in the pair to the location of the other signal source in the pair, and vice versa, are used to thereby estimate the distance between the pair of signal sources. The pair of signal sources are considered to be linked and a database is built up including data which, for each instance of a pair of signal sources which are treated as linked, identifies the two signal sources which make up the pair and data which can be related to the estimated distance between each pair of linked signal sources. The resulting data is treated as a graph, with the signal sources as nodes, and the links between signal sources as edges with a length related to the estimated distance between each pair of linked signal sources. The graph is optimised and analysed to subsequently estimate location-related properties of mobile devices which detect signals from signal sources in the database.

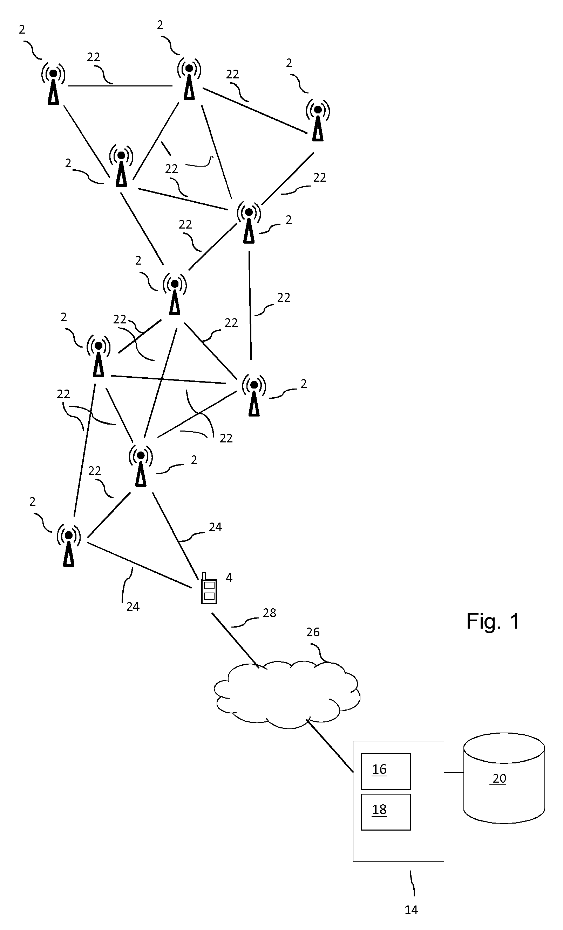

With reference to Figure 1, a server (14) according to the invention comprises at least one processor (16) and memory (18) storing computer program code which when executed by the at least processor cause the server to carry out the methods of the invention and to build up a database (20) stored on one or more hard drives, solid-state memory or other tangible data storage device, and comprising data concerning many pairs of signal sources. Each instance of a linked pair of signal sources for which data is stored is represented here by a line (22) extending between the signal sources.

The signal sources may, for example, be wireless access points, or other terrestrial radio beacons, for example BLE (Bluetooth Low Energy) specification beacons, such as iBeacons or Eddystone Beacons (iBeacon is a trade mark of Apple Inc, Eddystone is a trade mark such of Google, Inc.) etc. Typically, they broadcast their MAC address, which facilitates identification of the signal source, but this is not essential.

The invention enables estimation of location-related properties of a mobile device (4) which detects signals from signal sources. In the example of Figure 1, the mobile device can detect signals from two signal sources and the signals from those sources are indicated by lines (24). Mobile devices communicate with the server through the internet (26). The user devices will typically have a wireless internet connection (28), for example, through a cellular telephone system. It is not however necessary for this connection to be constant, as data can be stored and transmitted at a later time.

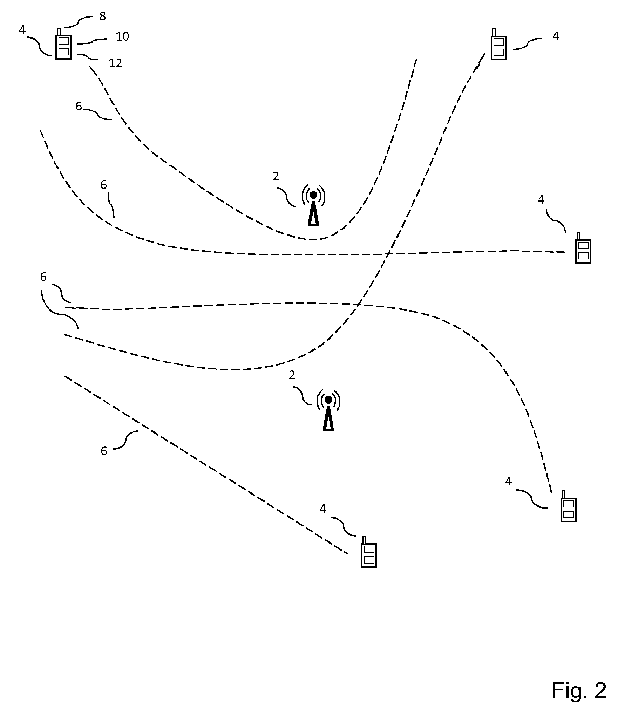

With reference to Figure 2, in a data acquisition phase (which may be an initial phase or carried out on a continual basis), measurements of signals from signal sources are made by mobile devices (4) while their users move along arbitrary paths (6) through the space around the signal sources. The mobile devices (4) comprise radio receivers (typically transceivers) (8), at least one microprocessor (10) in electronic communication with memory (12), which stores computer software that is executed by the processor in use, as well as one or more input devices (such as a touch screen), and sensors (such as an accelerometer, a gyroscope, a magnetometer etc.). Typically, the computer software comprises an operating system (such as Android or iOS), and a program module (such as an application (e.g. an app), or device driver) which collects data from the mobile device and communicates bidirectionally with the server. The mobile devices are not under the control of the system and the paths (6) along which they travel simply reflect the routes followed by users during everyday use of their device.

As the mobile devices move between the signal sources that make up a pair, they will at different times receive signals of different strengths from the two signal sources. Measurements of the strength of signals received from both signal sources at the same time are stored and transmitted to the server for further analysis. For each pair of electromagnetic signal sources the following parameters are calculated from many measurements by different mobile devices of the strength of signals received from the two signals sources (ss1 and ss2 respectively):

$$MinSignalLoss = Max(MinSignalLoss, |ss1\text{-}ss2|)$$

$$MaxSignalLoss = Min(MaxSignalLoss, |ss1\text{+}ss2|)$$

|ss1-ss2| is the magnitude of the difference in the strength of signals received from the two signal sources at the same time and (in the absence of environmental effects/reflections etc.) is at a maximum adjacent one of the signal sources, and a minimum at a point between the signal sources (equidistant if the signal sources have the same signal strength).

|ss1+ss2| is the magnitude of the sum of the strength of the signals received from the two signal sources at the same time and (in the absence of environmental effects/reflections etc.) is at a minimum at a position directly between the signal sources, with maxima coincident with each signal source.

In some embodiments, these parameters are adjusted for the transmission strength of either or both of the electromagnetic signal sources in the pair. For example, the maximum of the difference in measured signal strength minus the difference in transmit strength (ts1, ts2 for signal sources 1 and 2, where that data is available) may be used:

$$MinSignalLoss = Max(MinSignalLoss, |ss1\text{-}ts1\text{-}ss2\text{+}ts2|)$$

This can give a more accurate estimate of the attenuation of the signals from one signal source to the location of the other, although as the difference in transmit signal strengths of the sources is typically small (on a logarithmic scale) relative to the attenuation of the signals from one signal source to the location of the other, it is not essential to take the transmit signal strengths into account.

Similarly, MaxSignalLoss can be adjusted as follows:

$$MaxSignalLoss = Min(MaxSignalLoss, |ss1\text{+}ss2\text{-}ts1\text{-}ts2|)$$

Again, by allowing for the signal strength of the signal sources, a better estimate of the loss of signal strength from one signal source to the location of the other is obtained although, again, this is not essential as the transmit signal strengths (in dBm, for example) are typically relatively small in comparison to the attenuation of signals from one signal source to the location of the other signal source.

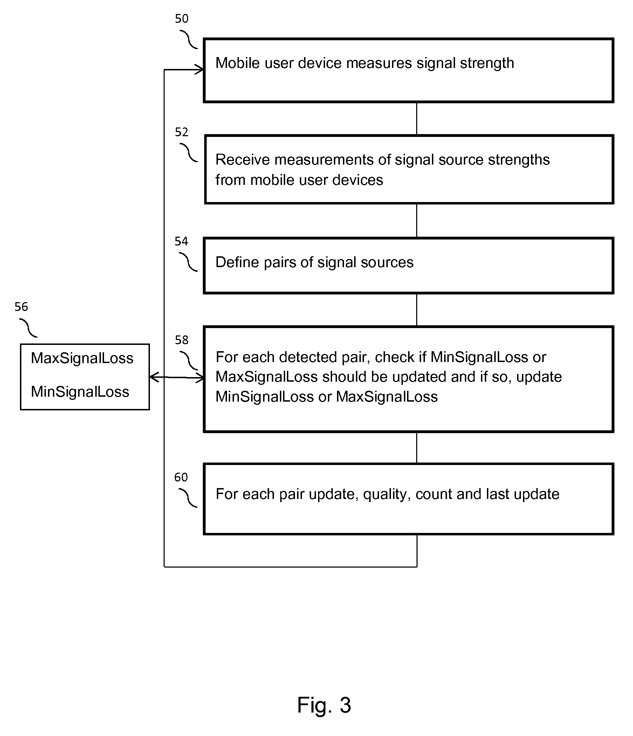

In more detail, with reference to Figure 3, individual mobile devices measure (50) the strength of signals from signal sources which they can detect. Each measurement relates to the strength of signals detected from one or more signal source at the same time. The measurement data is then transmitted to a server which receives (52) these measurements of signal source strength from various mobile devices. Provided that an individual measurement relates to the strength of signals from at least two signal sources, the data is further analysed.

For each combination of two signal sources from which signals have been detected, it is determined whether data already exists concerning that instance of a pair of signal sources. If it does not, then an instance of a pair of signal sources is defined (54). If a signal source is detected for the first time, data concerning that individual signal source is stored in a database. Data concerning an individual signal source typically includes the MAC address of the signal source, or another identifier, and optionally other data such as data indicative of the type of signal source.

For each pair of signal sources, values of MinSignalLoss and MaxSignalLoss (56) are maintained. When measurements are received of signals from each of a pair of signal sources, if a higher value of |ss1-ss2| is measured than has previously been measured or a lower value of |ss1+ss2| then the values of MinSignalLoss and MaxSignalLoss respectively for that pair of signal sources are updated accordingly (58). Typically, individual measurements will however be checked against quality criteria, such as stability etc. before MinSignalLoss and MaxSignalLoss are updated. As mentioned above, these values may be adjusted for the transmit signal strength of the respective signal sources, if this information is available.

Another parameter, quality, is calculated as the variance of all |ss1-ss2| values of all the measurements made concerning the same pair of two signal sources. In principle, MinSignalLoss and MaxSignalLoss should converge on the same value. Generally, MinSignalLoss should be at its highest value if a mobile device is actually at the location of one of the signal sources in the pair, and MaxSignalLoss should be at its lowest value when a mobile device is coincident with one the electromagnetic signal sources.

Thereafter, for each pair of signal sources, the measures of quality, account of a number of observations that have been used to calculate parameters, and the time of a last update, are all updated (60). The procedure then repeats using multiple measurements from multiple mobile devices.

In practice, the data which is received will be regulated. For example, only some mobile devices will transmit measurement data. Applications being executed by the mobile devices may be instructed by the server as to in which circumstances, or in which locations they should retrieve data to transmit to the server. In other embodiments, the mobile devices store the data continuously, and the server requests that specific mobile devices send specific measurement data, for example measurements data about pairs of signal sources for which there is relatively little data. It may be that mobile devices are transmitted data concerning signal sources which are expected to be close to them and the quality of data received about those signal sources and that the mobile devices only send back data when they can detect a signal source for which there is only low quality data available so far. In some implementations Values of MinSignalLoss and MaxSignalLoss for specific pairs of signals sources are transmitted to the mobile devices who will send measurements back to the service if they make measurements which might lead to an update in MinSignalLoss or MaxSignalLoss.

Accordingly, over time, the system builds up better estimates of the attenuation of signals from one of the signal sources in the pair, between that signal source and the location of the other signal source in the pair, and vice versa. In some circumstances, users will not get especially close to a particular signal source and extrapolation of the measurements which are made is used, to determine values of MinSignalLoss and MaxSignalLoss.

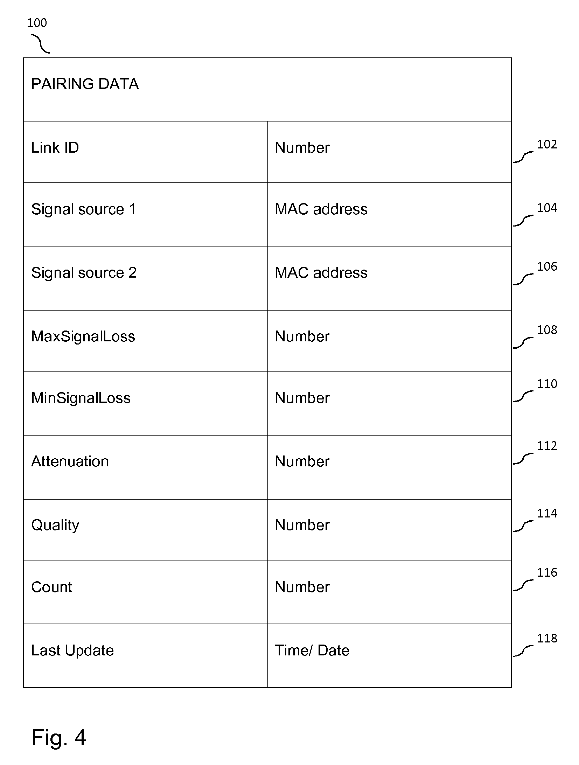

Accordingly, the data shown in Figure 4 is accumulated in the database (20) for each of the instance of a pair of signal sources. Quality criteria are used to determine whether to include a data concerning a particular pair of electromagnetic signal sources. Generally, a record will be created in a database if the signal sources are sufficiently close that signal strength measurements of the two can be reliably measured by individual mobile devices. In regions (areas or volumes) with relatively high densities of signal sources, it may be that data is only stored in relation to pairs of electromagnetic signal sources which are relatively close to each other, or some relatively close electromagnetic signal sources may be deliberately omitted from links so that links are formed between further apart electromagnetic signal sources.

With reference to Figure 4, the following data (100) is stored for each instance of a pair of signal sources: An identifier of the instance (102); an identifier (MAC address) (104) of one of the signal sources in the pair; an identifier (MAC address) (106) of the other signal source in the pair; the current value of MaxSignalLoss (108) calculated for the pair by the method set out above; the current value of MinSignalLoss (110) for the pair calculated by the method set out above; an attenuation parameter (112) is calculated during processing of the pair data (and is typically limited to be between MaxSignalLoss and MinSignalLoss); the variance of the signal strength measurements (114) (which is indicative of the quality of the measurements); the number (116) of measurements which have given rise to the instance data; details as to the time and date (118) when the data concerning that instance was last updated.

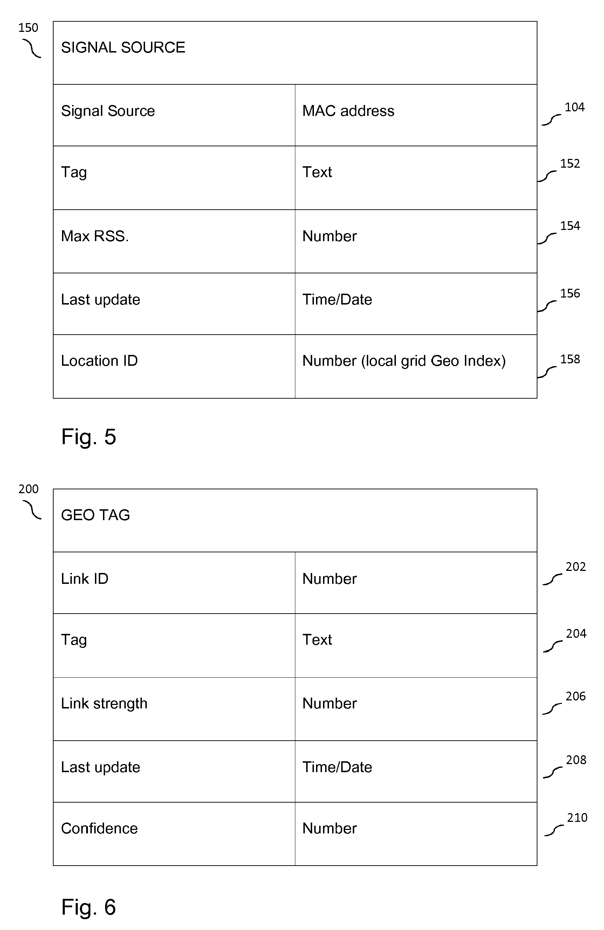

With reference to Figure 5, for each signal source, the following data (150) is stored. An identifier (104) of the signal source (the MAC address); one or more alphanumeric tags (152) which function as labels and categorise the signal source; the maximum detected strength of signals from that signal source (154) (which is useful as an estimate of the transmit signal strength of that signal source); the time (156) when data concerning that signal source was last updated, and an identifier of the location (158) of the signal source in a local grid format which is not referenced to absolute position. The identifier of the location may comprise coordinates in an arbitrary 2D or 3D grid (which may not be matched to absolute position, or orientation), or data which can be converted into coordinates in an arbitrary 2D or 3D grid (such as a geohash, geocode or geoindex, or in general an encoding system which relates a parameter to part of a 2D or 3D grid).

For each pairing, MinSignalLoss and MaxSignalLoss are both indicative of the distance between the signal sources. These generally converge on the value which would be obtained for attenuation if it was possible to measure the strength of signals from one of the signal sources in the pair, precisely at the position of the other of the pair. In some implementations they are averaged (either arithmetically or geometrically), to provide an initial estimate of the attenuation of signals from one signal source in the pair to the location of the other signal source in the pair, which is indicative of the distance between these signal sources. In some implementations MinSignalLoss is used to provide an initial estimate of the attenuation of signals from one signal source in the pair to the location of the other signal source in the pair.

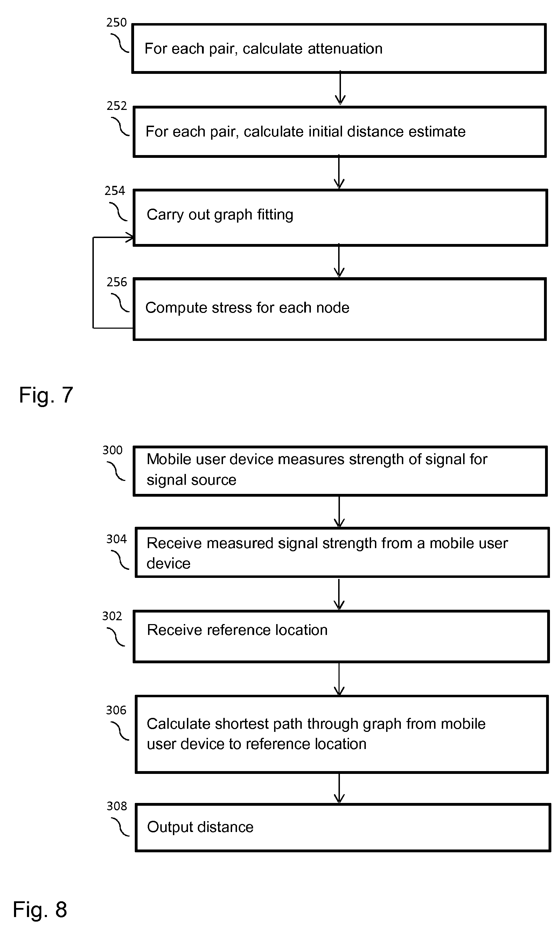

With reference to Figure 7, once sufficient data has been collected to enable the subsequent process to be sufficiently accurate, the server works through each instance of the pairs of signal sources, and calculates (250) an initial estimate of attenuation from one signal source in the pair to the location of the other (*SignalLossi*). As described above, this may for example be the arithmetic or geometric mean of MinSignalLoss and MaxSignalLoss for the instance of a pair of signal sources, or the value of MinSignalLoss.

For each of the instances, the server then calculates (252) an initial estimate of the distance (*Di*) between the pair of signal sources, from the initial estimate of attenuation (*SignalLossi*) using the following formula in which do is a reference distance (e.g. could be set to 1 for all links, or derived from the strongest signal observed per link), *n* is a path loss attenuation parameter usually set between 2 and 4 dependent on the properties of the attenuation of signals in the area around the signal sources, and $\alpha i$ is a parameter selected to reflect inaccuracies of signal detection, which may be a function of the quality measure for that pair of signal sources. *n* and $\alpha i$ can be determined by experimental optimisation.

$$Di = d_0 * 10^{\frac{SignalLossi}{10n}} - \alpha i$$

As a result initial distance estimates (*Di*) are now available for each instance of a pair of signal sources. The resulting data is then treated as an undirected graph, having each signal source as a node, and with each instance of a pair of signal sources being an edge extending between these nodes and having an initial length equal to the initial distance estimate calculated as above. In practice, due to both measurement error and variations in attenuation depending on environmental factors around each signal source, the initial distance estimates will not be consistent.

An iterative graph fitting procedure (254) is then carried out to amend the estimated distances between the nodes, to give amended distance estimates ($\delta i$). In an example, the following stress value, which is an example of a consistency parameter, is calculated for each link:

$$Stress = \sqrt{\frac{\sum (Di - \delta i)^2}{\sum Di^2}}$$

*Di* is the initial distance estimate for a given link between a pair of signal source and $\delta i$ is the amended distance estimate after optimisation. In the iterative procedure, $\delta i$ is adjusted to minimise the overall stress.

A number of methods of optimising a graph to minimise stress are known. For example, by stress majorization e.g. as described in Graph Drawing by Stress Majorization (Gansner, Emden R.; Koren, Yehuda; North, Stephen; 12th International Symposium, GD 2004, New York, NY, USA, September 29-October 2, 2004, Revised Selected Papers Vol. 3383 of the series Lecture Notes in Computer Science pp. 239-250, Springer Berlin Heidelberg), which is incorporated herein by virtue of this reference.

At the same time, the procedure may optionally involve comparing two graphs, for example, only generated on the mobile device relating to a signal source detected by that individual mobile device, and another graph formed on the server. This facilitates identifying corresponding pairs, new pairs, and the merging of two similar pairs into a single database record. Graphs can be compared by calculating graph edit distance (GED), for example as described in Sanfeliu, Alberto; Fu, King-Sun (1983). "A distance measure between attributed relational graphs for pattern recognition". IEEE Transactions on Systems, Man and Cybernetics 13 (3): 353-363, which is incorporated herein by virtue of this reference.

Thus, estimates are obtained of the distance between the signal sources in each pair. This data can be stored as distance estimates, or as revised estimates of the attenuation of signals between the signal sources in each pair (112), which can be related to the distance, e.g. by the formula above. In some examples, MinSignalLoss is used as an initial estimate of the attenuation of signals between the signal sources in each pair, initial estimates are made of the distance between the signal sources in each pair, the graph of pairs of signal sources is then optimised and it is then checked that the attenuation of signals which is equivalent of the estimated distance between the signal sources after optimisation does not exceed MaxSignalLoss. If it does, then the attenuation parameter is limited to MaxSignalLoss and the estimated distance between the signal sources is adjusted correspondingly.

Applications

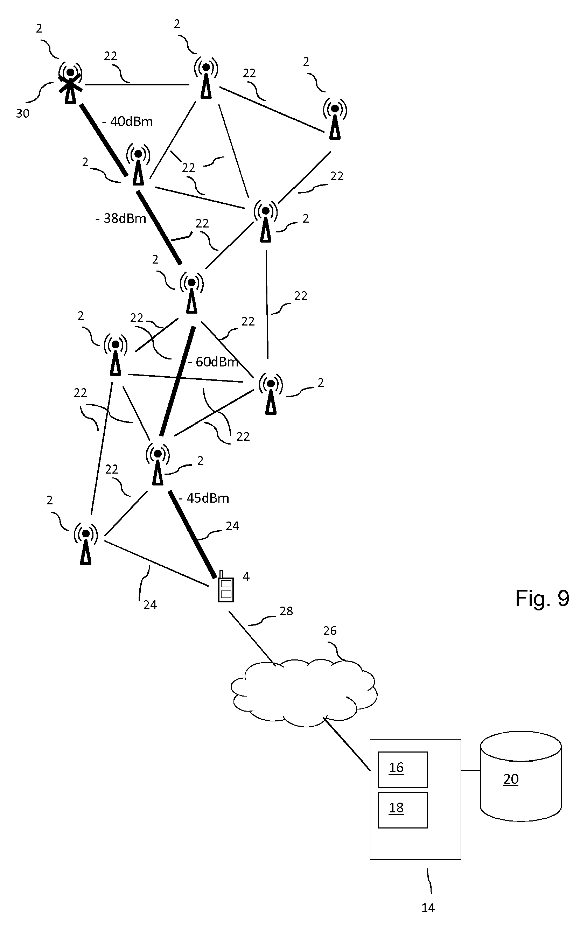

A first application of the resulting data is to estimate the distance between the point (in 2D or 3D space) where a mobile device (4) is located, and a reference location (30) which, in a first example shown in Figure 9, is the location of one of the signal sources.

With reference to Figure 8, a mobile device measures the strength of signals from signal sources which it can detect. A mobile device measures (300) the strength of signals from signal sources within detection range and transmits those measurements to a server. A distance estimation program executed by at least one processor of the server receives (302) the measurements and then receives (304) the reference location (in this case in the form of an identifier of a signal source).

The server then calculates (304) the shortest continuous path through the graph which has the signal sources as nodes, and links between the signal sources which form instances of pairs of signal sources as edges. The length of an individual link is the amended distance estimate, $\delta i$, determined after the graph fitting procedure, and these are summed for a continuous path from the reference location to a signal source which can be detected by the mobile device to work out a total length. One skilled in the art will be aware of various approaches to solving this, for example Dijkstra's algorithm (Dijkstra, E. W. (1959). "A note on two problems in connexion with graphs" (PDF). Numerische Mathematik 1: 269-271., and Cormen, Thomas H.; Leiserson, Charles E.; Rivest, Ronald L.; Stein, Clifford (2001). "Section 24.3: Dijkstra's algorithm". Introduction to Algorithms (Second ed.). MIT Press and McGraw-Hill. pp. 595-601, each of which is incorporated herein by virtue of this reference) or the Bellman Ford algorithm. It is also possible to obtain a list of the shortest paths rather than just one using the K shortest path routing algorithm (Michael Gunther et al.: "Symbolic calculation of K-shortest paths and related measures with the stochastic process algebra tool CASPA". In: Int'l Workshop on Dynamic Aspects in Dependability Models for Fault-Tolerant Systems (DYADEM-FTS), ACM Press (2010) 13-18, incorporated herein by virtue of this reference).

In Figure 9, the shortest path between signal sources to the mobile device is shown with a thicker line. The initial attenuation values for each link were -40dBm, -38dBm, - 60dBm and (for the link for the final signal source to the mobile device), -45dBm.

Advantageously, it has been possible to estimate the distance between the mobile device and the signal source which is the reference location, without requiring knowledge of the absolute position of either. The method can be used to estimate large or short distances.

In general, the direct line between the mobile device and the target location will be shorter than the route formed by following paths between signal sources, which will typically zig zag rather than going in a straight line. This can optionally be addressed by multiplying the estimate distance by a scaling factor, or taking into account the variation in distance calculated by a plurality of the shortest routes (e.g. obtained using the K-shortest path algorithm above), for example.

Alternatively, the distance can be determined by using the amended distance estimates to fit the position of the signal source which is the reference location, and either the position of the mobile device or one or more of the signal sources which the mobile device detects, in a local (not absolute) coordinate system, and calculating the Euclidean distance therebetween. These local coordinates for example may be obtained using stress majorization (as per Gansner et al. referenced above) and may already be available as a result. Local coordinates may be calculated only if the number of nodes between the mobile device and the reference location is below a threshold, for example, because the calculation of local coordinates to enable a Euclidean distance to be calculated can involve a considerable computational burden if large distances are involved.

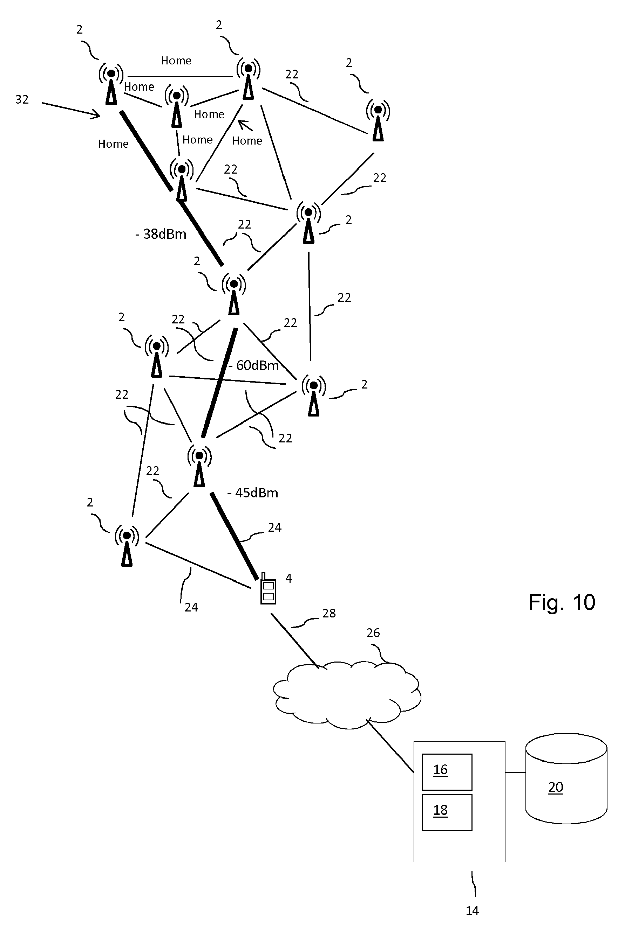

In the example of Figure 10, the distance which is calculated is the distance from the mobile device not to a single signal source but to a region (32) defined by several links between signal sources. Links between pairs of signal sources can be labelled with tags concerning their location. In this example, six links have been labelled HOME. In this case the distance which is calculated is the shortest distance, using the amended distance estimates, $\delta i$, from a signal source which is part of a link which has been labelled HOME to the mobile device is determined. Again, Dijkstra's algorithm is suitable.

With reference to Figure 6, a data record for a tag (200) may comprise an identifier (202) of the link between signal sources to which it relates; a character string (204) indicative of the tag; a measure of the strength of the link (206) (e.g. the attenuation parameter (112), or adjusted distance parameter for the link etc.), the time and date (208) of the last update to the tag data and a confidence parameter (210) indicative of the confidence that the tag is appropriate to the link.

In another example, signal sources are labelled, instead of or as well as links between signal sources, and the distance which is calculated is the distance from the mobile device to the nearest signal source with a specific label.

When calculating a distance between a mobile device (4) and a location (e.g. to a point, or to a signal source (32) or to a link between signals sources with a specific label (34)), it is possible to include the estimated distance between the mobile device and a signal source which it can currently detect. The distance from the mobile device to a signal source (whichever detected signal source is closest to the reference location or area) is estimated from the strength of signals received from the signal source (-45dBm in Figure 9) and the transmit signal strength of that signal source. However, that distance could also be omitted and may be irrelevant over large distances. In that case, the distance could simply be the distance from one of the signal sources which can be detected to the reference location, along the links between signal sources.

Similarly, the location to which a distance is calculated need not be coincident with the position of a signal source. A further distance may be added on. However, if the reference location is defined as the location of a signal source, or with reference to several signal sources (e.g. as the centroid of the position of several signal sources with the same tag), this leads to a simple way of calculating distances without a requirement to calculate the absolute position of the signal source or several signal sources, or to consider the distance between the reference location and the signal sources nearest to the reference location.

The reference location may also be a locus, including a 2 dimensional or 3 dimensional boundary, which may function as a geofence. The locus may again be defined by labelling links between signal sources, or individual signal sources.

In one example, a proprietor of a specific signal source (such as a controller of a retail outlet having a wireless access point or radio beacon) requests and receives an estimate of the distance between a mobile device and that signal source (and therefore that retail outlet) without a requirement for the absolute location of the retail outlet, or the signal source, or the mobile device, to be known.

In another example, a geofencing service frequently recalculates the estimated distance between a user and a plurality of reference loci, to determine when a location-related property concerning those one or more of those loci is met, such as when a user leaves a locus, enters a locus, exceeds a certain distance from a locus, enters within a certain distance of a locus and so forth. If the appropriate property is met, an event is generated to enable suitable action to be taken.

In another example, it is determined whether a mobile device is within a specific region which is defined by labels allocated to links between signal source, or to signal sources. A mobile device is within the specific region is it fulfils specified criteria, e.g. can detect, with above a predetermined signal strength, both signal sources which form a specific link.

Tagging

Links (and/or individual signal sources) can be tagged (labelled) in a number of ways. They may be manually tagged by a user entering the tag using a computer user interface. However, they may be determined partially or entirely automatically.

For example, a corresponding tag (label) may be allocated to several links between a group of three or more closely spaced signal sources. The close spacing can be determined from the signal strength measurements made by mobile devices. Thus, where a cluster of a sufficient number of sufficiently closely spaced signal sources is identified, that cluster can be automatically labelled. This can be carried out by, for example, following edges in the graph (links between signal source) which have attenuation or distance parameters indicative of a distance below a threshold distance and determining whether this enables a number of nodes (signal sources) exceeding a threshold group size to be found and, if so, assigning the same label to each. This can enable structure such as building, business etc. to be automatically identified and labelled.

Similarly tags may be copied from one link, or signal source, to adjacent connected links or signal sources if the length of the intervening links is below a threshold distance. The length (initial or adjusted) or attenuation parameters can be compared against a threshold. For example, a user (such as a proprietor of a retail outlet) might tag an individual signal source, or link between two signal sources, with a specific tag (e.g. a tag which is indicative of that retail outlet) and this tag is automatically propagates to other links or signal sources nearby by following edges in the graph (links between signal sources) which meet specific distance criteria (e.g. below a predetermined length, and optically also below a predetermined distance from the initially seeded link or signal source).

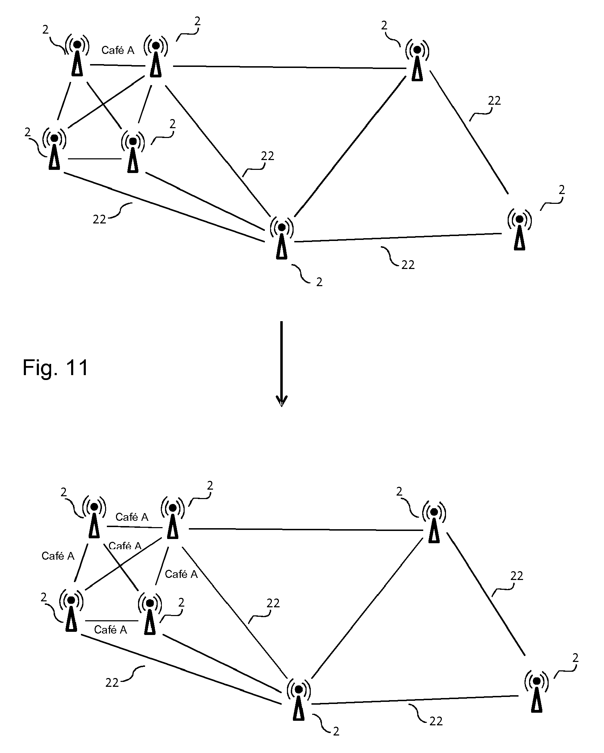

This is shown for example in Figure 11 in which a first link is tagged "Cafe A" by the proprietor of a cafe. This tag is then automatically propagated to adjacent links which have a length (or corresponding attenuation) below a predetermined threshold.

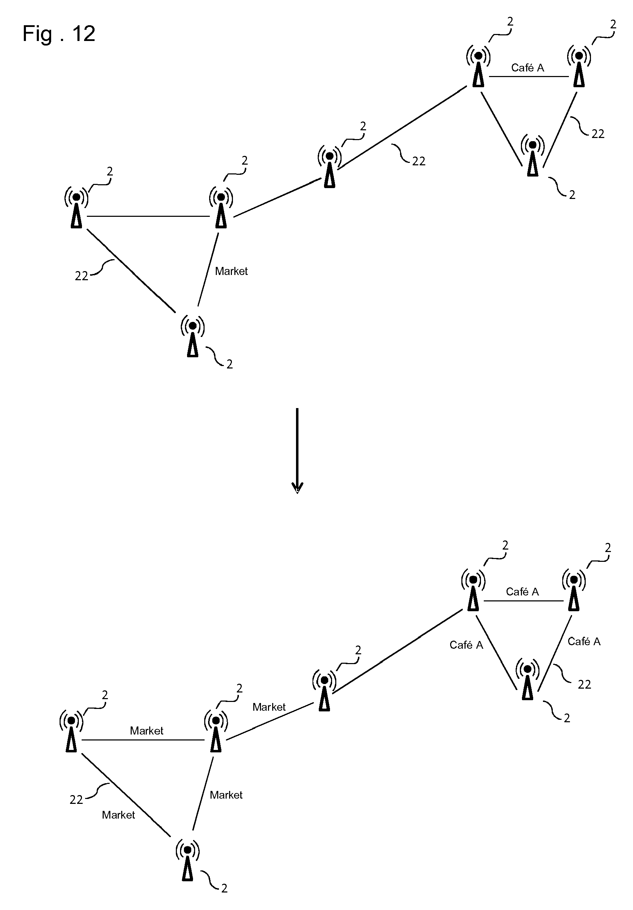

In some examples, whether a tag is propagated to an adjacent link or connected signal source depends on tags associated with other adjacent links or connected signal sources. For example, in Figure 12, a first link is initially tagged "Café A" and a second link is initially tagged "Market" by the proprietor of a retail outlet. The labels are then propagated to adjacent links which are below a predetermined length, but when there is a one link which is adjacent to a link which has been tagged with one tag, and a link which is adjacent to a link which has been tagged with another tag, and which is below the predetermined length that link is allocated the tag of the adjacent link which is shortest (or in another example, which has the shortest path through connected links to the corresponding originally tagged link or signal source).

Aiding Absolute Position Systems

The methods described above can also be used to supplement known absolute positioning systems which estimate the absolute position of a mobile device which comprises a radio receiver, by analysing signals received by the radio receiver from electromagnetic signal sources which are within detection range of the radio receiver, and which use data specifying estimated absolute positions of each of those signal sources to thereby estimate the position of the mobile device.

In such absolute positioning systems, databases of positioning data, comprising identifiers of signal sources and estimates of the position of the signal sources, can be built up using measurements made by mobile devices of signals from signal sources, to supplement Global Navigation Satellite System data. An example system is disclosed in EP 2517041 (Sensewhere Limited). Once a suitable database of positioning data has been generated, the position of mobile devices can be estimated by measuring signals from signal sources, and processing either signal strength or time-based measurements (e.g. round trip time delay measurements) to estimate the distance between the mobile device and detected signal sources, e.g. by triangulation.

An example of an absolute positioning system will now be described:

In this example, the absolute positioning application calculates the distance of a mobile device from each of the signal sources which can be detected by the mobile device using the following formula:

$$P_r = \frac{P_t G_t G_r \lambda^2}{(4\pi)^2 d^2} \qquad (1)$$

where $P_r$ is the received signal power at the user device, $P_t$ is the transmitted power of the signal source, $G_r$ and $G_t$ are the receiver and transmitter gains respectively, A is the signal wavelength and d is a distance between source and receiver.

This function may alternatively be expressed in terms of propagation gain (PG) as:

$$PG = \frac{P_r}{P_t G_t G_r} = \frac{\lambda^2}{(4\pi)^2 d^2} \qquad (2)$$

and in decibels form as:

$$PG_{dB} = 20 \log (\lambda/4\pi d) \qquad (3)$$

Typically, all of the parameters of the above equations, apart from distance, d, are known to the mobile device either from the data measured from the signal sources or from the locally stored positioning data received from an absolute positioning system controller. Accordingly, the mobile device may determine its distance, d, from a given signal source using the above equation.

The above equation is useful for a free space environment, but may not be sufficiently accurate for use in "real world" indoor environments such as tunnels or shopping centres. An alternative equation for use in such indoor environments may be:

$$PG_{dB} = 20 \log (\lambda/4\pi d_0) + 10n\log(d/d_0) + X_\sigma \qquad (4)$$

where X, n and $d_0$ are parameters which vary with different indoor environments and which can be determined empirically. These parameters may be received from the data stored in the at least one database of positioning data, for a particular region or for the detection of a particular signal source.

By processing the known positions of signal sources together with the distances calculated from each signal source, the position of the mobile device can be estimated by, for example, triangulation.

To further improve these estimates, an absolute positioning application may use data from one or more other sensors built into the mobile device such as a GPS positioning program module, a compass, an accelerometer, a camera etc. For example, it may use changes in the position estimate from a GPS program module, changes in orientation measured by a compass and a number of steps taken by a user calculated by a pedometer program module using the accelerometer to estimate the direction and distance of movements of the user device and to process that along with past estimates of position to estimate current position.

Over time, numerous measurements of signals from signal sources are made by numerous mobile devices. These measurements are obtained by the positioning application and transmitted to the controller of the absolute positioning system. The controller uses these measurements to improve the data stored in the at least one database of positioning data, for example to:

- Add new signal sources
- Delete signal sources
- Update estimates of the position of signal sources
- Update level(s) of confidence
- Update estimates of the transmission power of the signal source

Estimates of the position of signal sources can be updated by processing the estimated positions of mobile devices at each of a plurality of measurements of a signal source along with the estimated distance from the respective mobile device to each signal source when each measurement occurs. Over time, such updates make an overall improve in the estimates of the position of signal sources, by iteration. In practice, only some measurements of signals from signal sources are used to estimate the position of signal sources, to avoid excessive data collection and transmission, for example, measurements may be transmitted only for signal sources which are not previously known or where confidence in the estimated position of that signal source is below a threshold.

The improved positioning data can subsequently be transmitted to the same or other mobile devices to gradually improve the quality of the positioning data over time.

The methods described above, and database (20) can be used to supplement such an absolute positioning system. For example, it is possible to estimate the absolute position of a signal source for which there is currently no data, or not data which meets one or more quality criteria. To do this, the procedure described above with reference to Figures 1 to 7 is carried out and then, for a specific signal source for which it is desired to obtain an estimate of absolute position, the distance between that specific signal source and a plurality of (usually at least 3 or at least 4) other signal sources having an absolute position which is accurately known is estimated. The estimated distances and the absolute positions of the other signal sources are thereby processed to estimate the absolute position of the specified signal source (e.g. by triangulation or the weighted centroid method). The resulting absolute position estimate is then used as the absolute position of the specified signal source or used to improve an estimate of the absolute position of the specified signal source. In a variation of this approach, the procedures described above are used to estimate the distance between a mobile device and a plurality (usually at least 3 or at least 4) signal sources having an absolute position which is accurately known and the position of the mobile device is computed, e.g. by triangulation or the weighted centroid method.

These approaches can, for example, help to estimate the absolute position of signal sources in locations where absolute positions are hard to estimate by other known techniques, for example signal sources located in indoor areas where Global Navigation Satellite System positioning is not available or of poor quality.

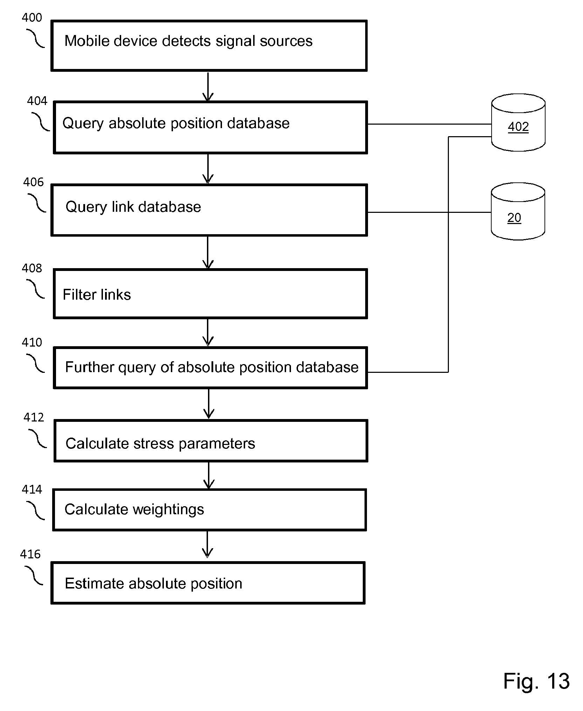

In some embodiments, measures of inconsistency, such as stress, determined using the procedure of Figures 1 to 7, are used to weight the contribution of individual detected signal sources in an estimation of the position of a mobile device. For example, with reference to Figure 13, the data from the procedure of Figure 7 is used during a subsequent absolute position estimate as follows. A mobile device detects (400) various signal sources and receives identifiers (MAC IDs) for each, along with estimates of the strength of signals from each. Some may be ignored if the signal strength is too low. For each of the detected signal sources an absolute positioning system database (402) of signal source position data is queried (404) to retrieve the estimated absolute position of the signal source and associated parameters (e.g. a measure of the accuracy of the absolute position estimate, an estimate of the transmit signal strength of the signal source etc.). The signal source link database (Figure 4) is queried (406) to retrieve identifiers of signal sources which are linked to the signal source. Links which do not meet a quality threshold (e.g. too high an attenuation parameter) are filtered out (408), however, this procedure typically identifies further signal sources which are linked to one or more of the detected signal sources, and the database (402) of signal source position data is also queried (410) to retrieve the estimated absolute position of those signal sources.

A stress parameter is then calculated (412) for each of a plurality of links including each signal source which was detected by the mobile device:

$$Stress = \sqrt{\frac{\sum (Di - \delta i)^2}{\sum Di^2}}$$

*Di* is the distance between the estimated location of the signal sources which make up the link according to the database of absolute positioning data, and *δi* is the amended distance estimate after optimisation from the procedure of Figure 7.

A weighting, $w_i$, is then calculated (414) as follows:

$$wi = \frac{Ni}{RSSi \times (STRESSi)^2 \times \sum \left[\frac{1}{RSSi \times (STRESSi)^2}\right]}$$

Where:

Ni is the number of links to the respective signal source which are part of the set which is being considered
RSSi is the strength of the signal received from the respective signal source STRESSi: is the calculated stress for this signal source, from the formula above.

STRESSi (the calculated stress of a signal source) can be determined by treating the position of a specific signal source as fixed and creating a graph with all of the links to that signal source stored in the database and calculate the stress in that graph (e.g. total stress in each link).

This weighting parameter is used to calculate (416) an estimated position of the mobile device by (in this example) the weighted centroid method.

$$L_u = \frac{\sum w_i . L_i}{\sum w_i}$$

$L_u$: user location
$L_i$: location for WAP i
$W_i$: weight assigned to WAP i

In the examples given above, the mobile devices detect the strength of signals from signals sources, which can be related to the distance of the signal source from the mobile device. However, this is not essential and in alternative implementations, estimates of distance between mobile devices and signal sources using time-based measurements (such as time of flight, including round trip time delay measurements) are employed instead. An initial estimate of the distance between the signal sources in a pair can be determined as the minimum sum of the distance from the mobile device to each signal sources measured using a time-based approach.

Still further, although the example embodiments above discuss signal sources which emit radio waves and the receivers comprise radio signal receiver, the invention is equally application with signal sources which emit visible light signals (e.g. visible light communication signals) and the receiver comprise visible light signal receivers (e.g. visible light communication signal receivers).

An advantage of the methods and apparatus described herein is that they present an alternative to, or means to reduce the use of global navigation satellite systems receivers, which can otherwise consume significant amounts of power in mobile devices. In some embodiments, it is estimated how accurately the location-related property has been determined and a global satellite navigation system receiver of the mobile device is not used to estimate absolute position, or is used relatively less frequently to estimate absolute position, if the location-related property has been determined relatively more accurately.

Further variations and modifications may be made within the scope of the invention herein disclosed.

**Claims**

1. A method of estimating a location-related property of a subject device comprising an electromagnetic signal receiver, the method comprising the steps of:

at a plurality of data collecting mobile devices comprising electromagnetic signal receivers, measuring electromagnetic signals received from a plurality of electromagnetic signal sources,
for each of a plurality of pairs of the electromagnetic signals sources, and for each of a plurality of mobile electromagnetic signal receivers, measuring at a plurality of locations of the electromagnetic signal receiver of the respective mobile device, the signals received from both of the electromagnetic signal sources in the pair, and processing the received signals to determine at least one signal transmission parameter related to the transmission of signals from each one of the pair of electromagnetic signal sources to the location of the other of the pair of electromagnetic signal sources,

storing said at least one signal transmission parameter, or a parameter derived therefrom, with reference to the pair of electromagnetic signal sources, and

subsequently processing the stored signal transmission parameters, or parameters derived therefrom, to estimate the location-related property of the subject device.

2. A method according to claim 1, wherein the at least one signal transmission parameter is calculated from a plurality of measurements, at different locations, by a plurality of data collecting mobile devices, of electromagnetic signals from both of the electromagnetic signal sources in the pair, and processed to determine an estimate of the distance between the electromagnetic signal sources in the respective pair.

3. A method according to claim 1 or claim 2, wherein the at least one signal transmission parameter comprises an estimate of the attenuation of an electromagnetic signal between one of the pair of electromagnetic signal sources and the location of the other of the pair of electromagnetic signal sources, or a parameter derived therefrom, or the strength of an electromagnetic signal from one of the pair of electromagnetic signal sources at the location of the other of the pair of electromagnetic signal sources, or a parameter derived therefrom.

4. A method according to claim 3, wherein the at least one signal transmission parameter comprises one or more of (1) the maximum difference between the strength of signals detected by the plurality of electromagnetic signal receivers from the electromagnetic signal sources in each pair, optionally adjusted for the transmission strengths of either or both of the electromagnetic signal sources (2) the maximum sum of the strength of signals detected by the plurality of mobile electromagnetic signal receivers from the electromagnetic signal sources in each pair, optionally adjusted for the transmit signal strengths of either or both of the electromagnetic signal sources in each pair or (3) a value derived from (1) and (2).

5. A method according to any one preceding claim, comprising processing the stored signal transmission parameters between a plurality of pairs of signal sources, or parameters derived therefrom (such as estimates of the distance between the pairs of electromagnetic signal sources), to estimate a consistency parameter relating to the consistency of the estimated distance between the pairs of electromagnetic signal sources derived from the stored signal transmission parameters.

6. A method according to any one preceding claim, comprising processing the stored signal transmission parameters or parameters derived therefrom (such as estimates of the distance between the pairs of electromagnetic signal sources) to improve the consistency of the estimated distance between the pairs of electromagnetic signal sources indicated by the stored signal transmission parameters or data derived therefrom.

7. A method according to any one preceding claim, further comprise associating a label with a said pair of electromagnetic signal sources, the label being indicative of a place.

8. A method according to claim 7, further comprising analysing the said pair of electromagnetic signal sources and labels to thereby amend the labelling of pairs of electromagnetic signal sources.

9. A method of estimating a location-related property of a subject device comprising an electromagnetic signal receiver, the method comprising providing a tangible data storage medium storing a database, the database comprising data specifying a plurality of pairs of electromagnetic signal sources and data related to the distance between the electromagnetic signal sources in each pair, the method further comprising querying the database to estimate the location-related property of a subject device.

10. A method according to any one preceding claim, wherein estimating the location-related property of a subject device is estimating the distance between a subject device comprising an electromagnetic signal receiver and a location and the method comprises:

at the electromagnetic signal receiver of the subject mobile device, measuring signals from electromagnetic signal sources,

thereby identifying at least one said electromagnetic signal source, or pair of electromagnetic signal sources detected by the electromagnetic signal receiver,

determining a path between the subject device and the location, the path comprising a plurality of links between said pairs of electromagnetic signal sources,
estimating the distance between subject device and the location by processing the stored signal transmission parameters relating to the pairs of electromagnetic signal sources which make up the path, or parameters derived therefrom.

11. A method according to any one of claims 1 to 7, further comprising receiving absolute position data concerning the absolute position of some of the electromagnetic signal sources and processing the stored signal transmission parameters between said pairs of electromagnetic signal sources to estimate the absolute position of at least some of the other electromagnetic signal sources.

12. A method according to claim 5, further comprising estimating the position of a subject mobile device comprising an electromagnetic signal receiver, wherein the electromagnetic signal receiver detects signals from one or more said electromagnetic signal sources, further comprising processing signals received by the electromagnetic signal receiver from one or more said electromagnetic signal sources and a database of positioning information comprising data about the position of a plurality of electromagnetic signal sources or signals therefrom, to thereby estimate the position of the subject mobile device, wherein the said processing takes into account the said consistency of the estimated distance between pairs of electromagnetic signal sources derived from the stored signal transmission parameters, for at least one pair of electromagnetic signal sources comprising an electromagnetic signal source detected by the electromagnetic signal receiver.

13. A method according to any one preceding claim, wherein estimating the location-related property comprises determining whether the location of a subject mobile device fulfils one or more location criteria, the subject mobile device having an electromagnetic signal receiver, the method comprising:

at the electromagnetic signal receiver, measuring signals from electromagnetic signal sources, thereby detecting at least one electromagnetic signal source which is part of at least one of the said pairs of electromagnetic signal sources,
determining from which at least one electromagnetic signal source is detected whether the one or more location criteria are fulfilled.

14. A method of determining whether a subject mobile device and a further subject mobile device, each of which comprises an electromagnetic signal receiver, are close to each other comprising at the electromagnetic signal receivers of both the subject mobile device and the further subject mobile device, detecting signals from electromagnetic signal sources, and querying a database of pairs of electromagnetic signal sources to determine if the subject mobile device detects one of a said pair of electromagnetic signal sources and the further subject mobile device detects the other of a said pair of electromagnetic signal sources and, if so, determining that the subject mobile device and further subject mobile device are close to each other.

15. A method of estimating a location-related property of a subject mobile device, the method comprising the steps of,
at a plurality of data collecting mobile devices comprising electromagnetic signal receivers, measuring electromagnetic signals received from a plurality of electromagnetic signal sources,
for each of a plurality of pairs of the electromagnetic signals sources which have been detected concurrently by one of the electromagnetic signal receivers, creating an instance of a link between the pair of electromagnetic signal sources and storing data concerning that link in a database,
for each instance of a link, processing measurements of signals received from both of the pair of electromagnetic signal sources concurrently to determine a distance parameter indicative of an estimated distance between the pair of electromagnetic signal sources and storing said distance parameter in the database,
processing the database and calculating at least one adjusted distance parameter to increase the consistency of the estimated distances between the signal sources,
subsequently receiving from a subject mobile device data indicative of signal sources which are detected by the subject mobile device and querying the database to thereby calculate an estimate of the location-related property of the subject mobile device.

Fig. 1

Fig. 2

50

Mobile user device measures signal strength

52

Receive measurements of signal source strengths from mobile user devices

54

Define pairs of signal sources

56

MaxSignalLoss

MinSignalLoss

58

For each detected pair, check if MinSignalLoss or MaxSignalLoss should be updated and if so, update MinSignalLoss or MaxSignalLoss

60

For each pair update, quality, count and last update

Fig. 3

100

| PAIRING DATA | | |
|---|---|---|
| Link ID | Number | 102 |
| Signal source 1 | MAC address | 104 |
| Signal source 2 | MAC address | 106 |
| MaxSignalLoss | Number | 108 |
| MinSignalLoss | Number | 110 |
| Attenuation | Number | 112 |
| Quality | Number | 114 |
| Count | Number | 116 |
| Last Update | Time/ Date | 118 |

Fig. 4

| SIGNAL SOURCE | | |
|---|---|---|
| Signal Source | MAC address | 104 |
| Tag | Text | 152 |
| Max RSS. | Number | 154 |
| Last update | Time/Date | 156 |
| Location ID | Number (local grid Geo Index) | 158 |

150

Fig. 5

| GEO TAG | | |
|---|---|---|
| Link ID | Number | 202 |
| Tag | Text | 204 |
| Link strength | Number | 206 |
| Last update | Time/Date | 208 |
| Confidence | Number | 210 |

200

Fig. 6

250 For each pair, calculate attenuation

252 For each pair, calculate initial distance estimate

254 Carry out graph fitting

256 Compute stress for each node

Fig. 7

300 Mobile user device measures strength of signal for signal source

304 Receive measured signal strength from a mobile user device

302 Receive reference location

306 Calculate shortest path through graph from mobile user device to reference location

308 Output distance

Fig. 8

Fig. 9

Fig. 10

Fig. 11

Fig . 12

400 — Mobile device detects signal sources

404 — Query absolute position database

406 — Query link database

408 — Filter links

410 — Further query of absolute position database

412 — Calculate stress parameters

414 — Calculate weightings

416 — Estimate absolute position

402

20

Fig. 13

Europäisches
Patentamt

European
Patent Office

Office européen
des brevets

# EUROPEAN SEARCH REPORT

**Application Number**

EP 16 18 3888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/084981 A1 (RED POINT POSITIONING CORP [US]) 11 June 2015 (2015-06-11)<br>* page 3, line 21 - page 7, line 23 *<br>* figures 3-6 *<br>* abstract *<br>----- | 1-15 | INV.<br>G01S5/02<br>G01S11/06<br>H04W64/00 |
| X | WO 2009/140031 A1 (APPLE INC [US]; CANON STEPHEN TYRONE [US]; SAZEGARI ALI [US]) 19 November 2009 (2009-11-19)<br>* page 13, paragraph 49 - page 21, paragraph 81 *<br>* figures 4-8 *<br>* abstract *<br>----- | 1,9,15 | |
| A | US 2012/077513 A1 (RIZZELLO MARCO [IT] ET AL) 29 March 2012 (2012-03-29)<br>* page 5, paragraph 119 - page 9, paragraph 192 *<br>* figures 1A-2C *<br>* abstract *<br>----- | 1-15 | |
| A | WO 2016/023069 A1 (COMMW SCIENT IND RES ORG [AU]) 18 February 2016 (2016-02-18)<br>* page 11, paragraph 52 - page 19, paragraph 95 *<br>* figures 3-6 *<br>* abstract *<br>----- | 1-15 | **TECHNICAL FIELDS SEARCHED (IPC)**<br>G01S<br>H04W |

The present search report has been drawn up for all claims

| Place of search | Date of completion of the search | Examiner |
|---|---|---|
| Munich | 17 February 2017 | von Walter, Sven-Uwe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 3888

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2017

| Patent document cited in search report | | | Publication date | Patent family member(s) | | | Publication date |
|---|---|---|---|---|---|---|---|
| WO 2015084981 | A1 | | 11-06-2015 | CN | 105993187 | A | 05-10-2016 |
| | | | | EP | 3078222 | A1 | 12-10-2016 |
| | | | | US | 2015156746 | A1 | 04-06-2015 |
| | | | | WO | 2015084981 | A1 | 11-06-2015 |
| WO 2009140031 | A1 | | 19-11-2009 | CN | 102066969 | A | 18-05-2011 |
| | | | | EP | 2286264 | A1 | 23-02-2011 |
| | | | | JP | 5739327 | B2 | 24-06-2015 |
| | | | | JP | 2011525234 | A | 15-09-2011 |
| | | | | KR | 20110019373 | A | 25-02-2011 |
| | | | | US | 2009286549 | A1 | 19-11-2009 |
| | | | | WO | 2009140031 | A1 | 19-11-2009 |
| US 2012077513 | A1 | | 29-03-2012 | IT | 1401771 | B1 | 02-08-2013 |
| | | | | US | 2012077513 | A1 | 29-03-2012 |
| WO 2016023069 | A1 | | 18-02-2016 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2517041 A

### Non-patent literature cited in the description

- **GANSNER, EMDEN R. ; KOREN, YEHUDA ; NORTH, STEPHEN.** 12th International Symposium. Springer, 29 September 2004, vol. 3383, 239-250
- **SANFELIU, ALBERTO ; FU, KING-SUN.** A distance measure between attributed relational graphs for pattern recognition. *IEEE Transactions on Systems, Man and Cybernetics,* 1983, vol. 13 (3), 353-363
- **DIJKSTRA, E. W.** A note on two problems in connexion with graphs. *Numerische Mathematik,* 1959, vol. 1, 269-271
- Section 24.3: Dijkstra's algorithm. **CORMEN, THOMAS H. ; LEISERSON, CHARLES E. ; RIVEST, RONALD L. ; STEIN, CLIFFORD.** Introduction to Algorithms. MIT Press and McGraw-Hill, 2001, 595-601
- Symbolic calculation of K-shortest paths and related measures with the stochastic process algebra tool CASPA. **MICHAEL GUNTHER et al.** Int'l Workshop on Dynamic Aspects in Dependability Models for Fault-Tolerant Systems (DYADEM-FTS). ACM Press, 2010, 13-18